# EUROPÄISCHE PATENTSCHRIFT

(11) **EP 2 712 873 B1**
(45) Veröffentlichungstag und Bekanntmachung des Hinweises auf die Patenterteilung: **09.11.2016**
(21) Anmeldenummer: 13004616.2
(22) Anmeldetag: 23.09.2013
(51) Int. Cl.: C08B 11/02, C08B 11/06, C08B 11/08, C08L 1/26, C08L 1/28

(54) **Celluloseether mit reaktiver Ankergruppe, daraus erhältliche modifizierte Celluloseether sowie Verfahren zu deren Herstellung**
Cellulose ethers with a reactive anchor group, modified cellulose ethers that can be obtained therefrom and method for the production thereof
Ether de cellulose doté de groupes d'ancrage réactifs, éther de cellulose modifié obtenu de la sorte et son procédé de fabrication

(30) Priorität: 28.09.2012 DE 102012019134
(43) Veröffentlichungstag der Anmeldung: 02.04.2014
(73) Patentinhaber: SE Tylose GmbH & Co.KG, 65203 Wiesbaden (DE)
(72) Erfinder: Kleinert, Mike, D-55130 Mainz (DE)
(74) Vertreter: Plate, Jürgen

(56) Entgegenhaltungen:
- WO-A1-00/08058
- WO-A1-2005/058971
- WO-A2-2008/112419
- US-A- 3 280 026
- L Petrus ET AL: "Preparation of 0-(3-azido-2-hydroxypropyI)cellulose and its photolysis to 0-(2-formyl-2-hydroxyethyl)cellulose", Chem. Papers, 1. Januar 1986 (1986-01-01), Seiten 519-522, XP055089290, Gefunden im Internet: URL:http://www.chempap.org/file_access.php ?file=404a519.pdf [gefunden am 2013-11-20]
- FEI-FEI YANG ET AL: "A Novel Cellulose-Based Azide Energetic Material: 1-Azido-2-hydroxypropyl Cellulose Ether", JOURNAL OF ENERGETIC MATERIALS, Bd. 29, Nr. 3, 1. Juli 2011 (2011-07-01), Seiten 241-260, XP055089350, ISSN: 0737-0652, DOI: 10.1080/07370652.2010.523755
- NIKOLAOS PAHIMANOLIS ET AL: "Surface functionalization of nanofibrillated cellulose using click-chemistry approach in aqueous media", CELLULOSE, KLUWER ACADEMIC PUBLISHERS (DORDRECHT), NL, Bd. 18, Nr. 5, 21. Juli 2011 (2011-07-21), Seiten 1201-1212, XP019936840, ISSN: 1572-882X, DOI: 10.1007/S10570-011-9573-4
- MICHAEL SLATER ET AL: ""Click Chemistry" in the Preparation of Porous Polymer-Based Particulate Stationary Phases for [mu]-HPLC Separation of Peptides and Proteins", ANALYTICAL CHEMISTRY, Bd. 78, Nr. 14, 1. Juli 2006 (2006-07-01), Seiten 4969-4975, XP055089293, ISSN: 0003-2700, DOI: 10.1021/ac060006s

## Beschreibung

Die Erfindung betrifft wasserlösliche Celluloseether, die reaktive Ankergruppen aufweisen, sowie modifizierte Celluloseether, die aus diesen Zwischenprodukten erhältlich sind. Sie betrifft daneben Verfahren zur Herstellung der Endprodukte. Die rheologischen Eigenschaften der Endprodukte lassen sich modular modifizierbar steuern. Bei der Anwendung läßt sich eine schaltbare Änderung der Rheologie realisieren.

Wasserlösliche Celluloseether, insbesondere nicht-ionische Celluloseether, werden auf sehr vielen Gebieten eingesetzt. Zu nennen ist insbesondere die Verwendung in Fertigbeton, Spritzmörtel oder Dispersionsfarben. Daneben ist auch die Verwendung als Tabletten-Coating von Bedeutung. Es ist wünschenswert, die Eigenschaften der Cellulose an die jeweilige Verwendung gezielt anzupassen. Wichtig sind insbesondere die rheologischen Eigenschaften der Celluloseether in wäßrigen Systemen.

Zur Einstellung der rheologischen Eigenschaften werden Celluloseether in großtechnischem Maßstab chemisch modifiziert.

Ein Beispiel sind hydrophob modifizierte Celluloseether, die eine ausreichende Viskosität in einem eng begrenzten niedrigen bis mittleren Scherbereich aufbauen. Die hydrophobe Modifizierung erfolgt beispielsweise durch Umsetzung eines Celluloseethers mit Hexadecylglycidylether. Bereits wenige hydrophobe Gruppen (DS < 0,1) genügen, um eine assoziative Wechselwirkung zwischen den Celluloseketten herzustellen. In wäßrigen Lösungen wird dadurch die Scherviskosität erhöht. Verwendet werden solche hydrophob modifizierten Celluloseether beispielsweise in Dispersionsfarben. Die Dispersionsfarben lassen sich dann mit deutlich verminderter Spritzneigung verstreichen.

Bekannt sind auch mit Allylgruppen modifizierte Cellulosether. Die Modifizierung wird erreicht durch Umsetzen des Celluloseethers mit Allylglycidylether. Allyl-modifizierte Hydroxyethylcellulosen werden beispielsweise als Schutzkolloid bei der Emulsionspolymerisation großtechnisch eingesetzt. Auch hier reicht ein geringer Substitutionsgrad an Allylgruppen (DS Allyl) in dem Celluloseether aus, um die gewünschte Veränderung der Eigenschaften zu bewirken (DE 19708531). Die Ausbeute, bezogen auf den eingesetzten Allylglycidylether ist mit etwa 15 bis 40 % in der Regel nur gering bis mäßig, weshalb auch hier nach Alternativen gesucht wurde.

Es bestand jedoch nach wie vor die Aufgabe, Celluloseether mit "maßgeschneiderten" Eigenschaften zur Verfügung zu stellen. Insbesondere sollen die rheologischen Eigenschaften in wäßriger Lösung einstellbar sein. Wünschenswert sind beispielsweise Celluloseether mit "schaltbaren" Eigenschaftsänderungen, die in wäßriger Lösung zunächst eine geringe Viskosität und erst später, nach entsprechender Modifikation im Anwendungsfall, eine höhere Viskosität aufweisen. Beispielsweise könnten wasserbasierte Farben mit hoher Endanwendungsviskosität dann zuvor mit deutlich geringerem Energieaufwand gemischt werden. Der Endanwender soll die Möglichkeit bekommen, durch Zugabe einer geringen Menge an Katalysator die Viskositäts- und Löslichkeitseigenschaften zu verändern.

Gefunden wurde nunmehr, dass sich Celluloseether mit paßgenauen Eigenschaften aus einem Zwischenprodukt mit Azidogruppen erzeugen lassen. In einer kupferkatalysierten 1,3-dipolaren Cycloadditionsreaktion (Huisgen-Reaktion) werden die Azidogruppen dann mit terminalen Alkinen umgesetzt. Mit den Alkinen läßt sich eine Vielzahl von modifizierenden Resten in den Celluloseether einbauen.

Gegenstand der Erfindung ist damit ein nicht-ionischer, wasserlöslicher Celluloseether, der 3-Azido-2-hydroxypropyl-Gruppen aufweist, die über eine Etherbindung mit der Cellulose verbunden sind. Neben den 3-Azido-2-hydroxypropylgruppen weisen die Celluloseether Alkyl- und/oder Hydroxyalkylgruppen auf.

Bevorzugte Ausgangsmaterialien sind dementsprechend wasserlösliche, nicht-ionische Celluloseether, wie Hydroxyethylcellulose (HEC), Methylhydroxyethylcellulose (MHEC), Hydroxypropylcellulose (HPC) oder Methylhydroxypropylcellulose. Bei Methylhydroxyethylcellulosen und Methylhydroxypropylcellulosen beträgt der DS(Me) allgemein 1,0 bis 2,5, bevorzugt 1,2 bis 2,5, besonders bevorzugt 1,4 bis 1,9, der MS (HE bzw. HP) allgemein 0,01 bis 1,0, bevorzugt 0,05 bis 0,8, besonders bevorzugt 0,05 bis 0,6. Bei Hydroxyethylcellulosen und Hydroxypropylcellulosen beträgt der MS(HE bzw. HP) allgemein 1,0 bis 4,0, bevorzugt 1,5 bis 3,3.

"Wasserlöslich" bedeutet im Zusammenhang mit der vorliegenden Erfindung, daß der unmodifizierte Celluloseether zu mehr als 1,0 % (w/w) vollständig in kaltem Wasser löslich ist.

Die Cellulose bzw. der Celluloseether wird dann mit Glycidylazid (1-Azido-2,3-epoxy-propan, Azidomethyloxiran; CAS No. 80044-09-3) umgesetzt. Das Glycidylazid (GA) ist erhältlich aus Epichlorhydrin und Natriumazid. Anstelle von Glycidylazid kann auch 1-Azido-3-chloro-propan-2-ol als retrosynthetischer Precursor des Glycidylazids eingesetzt werden. In jedem Fall muß der Celluloseether vorher mit einer Base, z.B. mit wäßriger NaOH, aktiviert werden.

Bereits in der Literatur beschrieben ist die Umsetzung von nanofibrillierter Cellulose mit Glycidylazid in wäßrigem Medium. Dabei wird Glycidylazid an alkalisierte Cellulose addiert (Cellulose 18 [2011] 1201 - 1212). Die Cellulose wird dabei jedoch nur an der Oberfläche und damit unzureichend verethert, so dass nur Substitutionsgrade des Azidoglycidyl-Substituenten im Bereich von 0,007 bis 0,07 pro Anhydroglucose-Einheit erreicht werden. Diese Produkte sind nicht als wasserlösliche Additive zur Einstellung der rheologischen Eigenschaften einer wäßrigen Zusammensetzung geeignet, weil wasserunlöslich.

Die Umsetzung von Cellulose mit Glycidylazid wurde auch von Yang et al. beschrieben (J. Energetic Materials 29 [2011] 241 - 260). Angestrebt wurden dabei 1-Azido-2-hydroxypropylcelluloseether mit einem hohen Stickstoffanteil (etwa 10 Gew.-%) und einem entsprechend hohen Substitutionsgrad mit Azidohydroxypropylgruppen (MS_{AHP} etwa 0,5 und höher) zur Verwendung in der Sprengtechnik. Solche Produkte sind jedoch in Wasser und organischen Lösungsmitteln unlöslich und kommen insofern dem erfindungsgemäßen Ziel der wasserlöslichen Celluloseether, insbesondere auf Basis von Hydroxyethylcellulose als Ausgangsstoff, konkret der Azidohydroxypropyl-hydroxyethylcellulose, nicht nahe.

Die erfindungsgemäßen, modifizierten Celluloseether sind nicht vergleichbar mit den im Stand der Technik beschriebenen Celluloseethern, denn sie enthalten neben Azidohydroxypropylgruppen auch Alkyl- und/oder Hydroxyalkylgruppen.

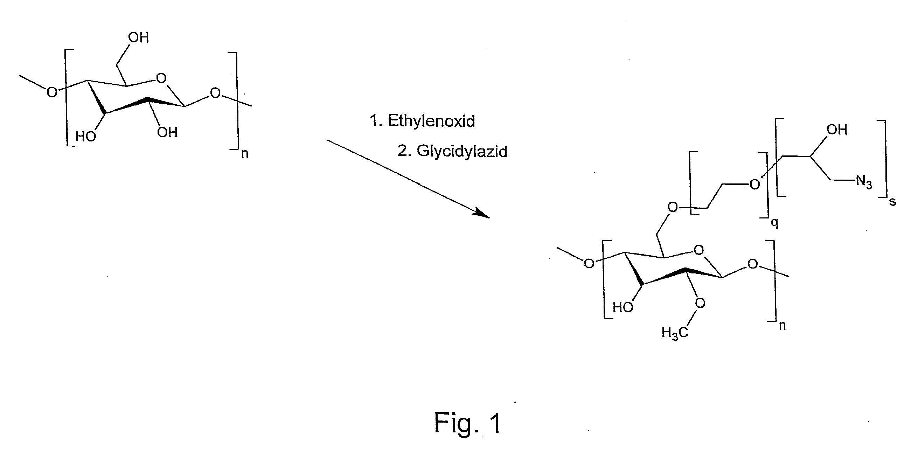

Bei der Umsetzung mit Glycidylazid entstehen Celluloseether mit 3-Azido-2-hydroxy-propyl-Substituenten. Die 3-Azido-2-hydroxy-propyl-Gruppen können dabei über die Hydroxylgruppen der Ethylenglykol- bzw. Propylenglykol-Seitenketten oder über die Hydroxylgruppen am Pyranosering gebunden sein (s. Fig. 1) und/oder direkt mit freien Hydroxygruppen des Cellulosethers umgesetzt sein. Der durchschnittliche Substitutionsgrad der Cellulose mit den 3-Azido-2-hydroxy-propyl-Gruppen (MS_{AHP}) liegt allgemein im Bereich von 0,001 bis 0,50 pro Anhydroglucose-Einheit, bevorzugt liegt der MS im Bereich von 0,01 bis 0,30, besonders bevorzugt im Bereich von 0,05 bis 0,25. Die erfindungsgemäßen, mit Azidogruppen substituierten Celluloseether haben zweckmäßig einen durchschnittlichen Polymersationsgrad DPₙ von 50 bis 3000, bevorzugt von 100 bis 2500, besonders bevorzugt von 250 bis 1500.

Erfindungsgemäße Celluloseether mit 3-Azido-2-hydroxypropyl-Gruppen lassen sich auch erhalten, wenn alkalisierte Cellulose unmittelbar nacheinander oder gleichzeitig mit einem Alkylenoxid und Glycidylazid in ein und demselben Reaktor in Form einer klassischen Co-Veretherung umgesetzt wird.

Die Ausnutzung der kupferkatalysierten Azid-Alkin-Kopplung (CuAAC) ermöglicht durch deren hohe chemische Orthogonalität gegenüber den industriellen Standardreaktionen in der Cellulosechemie eine präzedenzlose Flexibilität hinsichtlich der anzuknüpfenden Moleküle. Es können dies u.a. Seitenketten, Vernetzungsbausteine oder auch Reaktivfarbstoffe oder UV-aktive Chromophore sein.

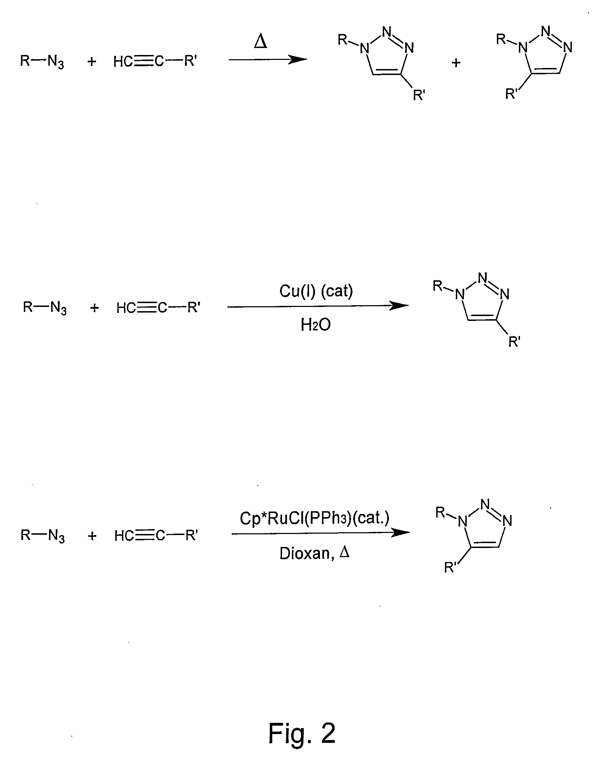

Bei der thermisch induzierten Huisgen-Cycloaddition entstehen Gemische von Regioisomeren (s. Fig. 2, oben). Die 1,3-dipolare Cycloaddition von Aziden an Alkine (Huisgen-Reaktion) erfolgt daher zweckmäßig mit Hilfe von Cu(I)-Katalysatoren. Dabei entstehen regioselektiv 1,4-disubstituierte [1,2,3]Triazole (s. Fig. 2, Mitte). Geeignet ist beispielsweise Cu(I)bromid, Cu(I)iodid oder Cu(I)acetat. Die katalytisch aktiven Cu(I)-Salze lassen sich auch in situ herstellen, beispielsweise aus Kupfer(II)sulfat durch Reduktion mit Ascorbinsäure in wässriger Lösung. Die Reaktion kann gegebenenfalls unter Ausschluß von Luftsauerstoff in einer InertgasAtmosphäre (z.B. unter Stickstoff) durchgeführt werden. Die metallkatalysierten Reaktionen laufen häufig bereits bei Raumtemperatur ab. Die Cycloadditionsreaktion kann gegebenenfalls auch direkt vom Endanwender, beispielsweise einem Hersteller von Dispersionsfarben bei der Formulierung der Farben, durchgeführt werden.

Die Azid-Alkin-Cycloaddition kann auch von Ruthenium-Verbindungen katalysiert werden, beispielsweise von Bis(triphenylphosphin)cyclopentadienylrutheniumchlorid. Dabei werden allerdings, im Unterschied zu der kupferkatalysierten Reaktion, regioselektiv 1,5-disubstituierte [1,2,3]Triazole erhalten (s. Fig. 2, unten).

Besonders geeignete Alkine sind Phenylacetylen, Propargylalkohol, Propiolsäure und andere Verbindungen mit einer terminalen C-C-Dreifachbindung. Es können auch Verbindungen mit 2 Kohlenstoff-Kohlenstoff-Dreifachbindungen (Diine) eingesetzt werden.

Allgemein geeignet als Alkin-Bausteine in der Huisgen-Reaktion sind:
a) Alkine der Formel H-C≡C-R⁴,
   wobei R⁴
   - ein geradkettiger oder verzweigter (C₁-C₁₈)Alkylrest,
   - ein Alkenylrest der Formel -[CH₂]ₘ-CH=CH₂, wobei m eine ganze Zahl von 1 bis 8 ist,
   - ein substituierter Alkylrest der Formel -[CH₂]ₙ-CX₂Y,
   wobei n eine ganze Zahl von 0 bis 8 ist, X für Wasserstoff, Fluor oder Chlor steht und Y für Wasserstoff, Fluor, Chlor, NH₂, OH, O-CH₃, CO₂H oder CO₂CH₃ steht mit der Maßgabe, dass X und Y nicht zugleich für ein Wasserstoffatom stehen,
   - ein Polyoxyalkylenrest der Formel -[CH₂-CH₂-O]ₚ-CH₂Z,
      wobei p eine ganze Zahl von 1 bis 8 ist und Z für ein Wasserstoffatom oder eine Methylgruppe steht,
   - ein aromatischer Rest, bevorzugt eine Phenyl-, Biphenyl oder Naphthylgruppe,
   - ein substituierter aromatischer Rest, wobei die an aromatische Kohlenstoffatome gebundenen Substituenten gleich oder verschieden und ausgewählt sind aus der Gruppe bestehend aus H, F, Cl, NH₂, CH₃ oder OCH₃, mit der Maßgabe, dass nicht alle Substituenten zugleich für ein Wasserstoffatom stehen, oder
   - ein heterocyclischer Rest, wie 1*H*-Imidazol-1-carbonyloxymethyl, ist;
   oder
b) Diine der Formel H-C≡C-R⁵-C≡C-H,
   wobei R⁵
   - ein zweiwertiger aromatischer Rest, wie *ortho-, meta-* oder *para-*Phenylen, Biphenyl-4,4'-diyl oder Naphthalin-1,4-diyl, ist oder
   - ein substituierter zweiwertiger aromatischer Rest, wobei die an aromatische Kohlenstoffatome gebundenen Substituenten gleich oder verschieden und ausgewählt sind aus der Gruppe bestehend aus H, F, Cl, NH₂, CH₃ oder OCH₃, wobei auch verschiedene Substituenten kombiniert sein können, mit der Maßgabe, dass nicht alle Substituenten zugleich für ein Wasserstoffatom stehen.

Die Cycloadditionsreaktion läßt sich mit einer Vielzahl verschiedener Alkine durchführen. Damit sind auf einfache Weise modifizierte Celluloseether mit den verschiedensten Eigenschaften zugänglich. Die Reaktion ist damit wesentlich flexibler als eine konventionelle Pfropfungsreaktion. Sie kann in Gegenwart von Wasser, organischen Lösemitteln oder Mischungen von Wasser mit organischen Lösemitteln durchgeführt werden. Geeignete organische Lösemittel sind beispielsweise Tetrahydrofuran, Dioxan, Dimethylsulfoxid, Acetonitril, Methylenchlorid, Chloroform, Methanol, Ethanol, *tert*.-Butanol, Essigsäureethylester, Aceton oder Dimethylformamid.

AHP-HEC ist sehr gut wasserlöslich und bildet in Wasser eine klare, viskose Lösung. Überraschend wurde gefunden, dass sich die rheologischen Eigenschaften der gelösten AHP-HEC nach der Umsetzung mit Alkinbausteinen, beispielsweise mit Phenylacetylen, vollständig umkehren lassen. Es lassen sich mittels der beschriebenen CuAAC sogar Produkte erhalten, die, ausgehend von einem viskosen Fluid, das strukturelastische Verhalten von Festkörpern (Gelen) aufweisen.

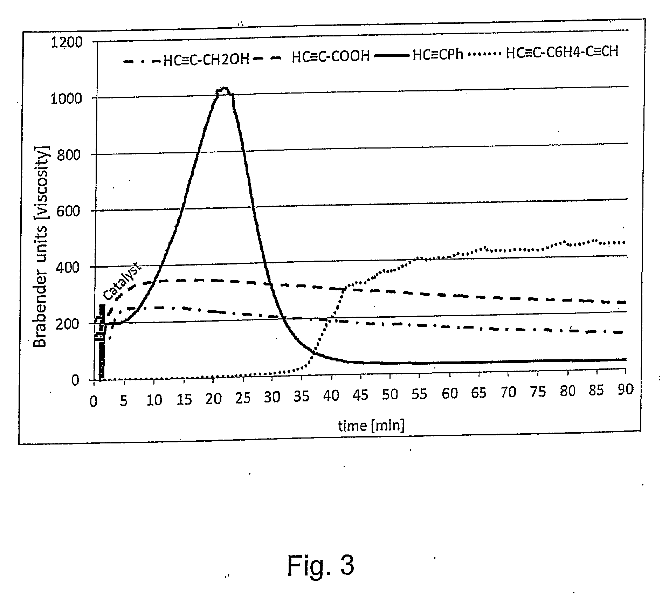

Im Verlauf der Cycloadditionsreaktion kann es zu starken Veränderungen der Viskosität kommen, wie in Fig. 3 gezeigt. So wird bei der Cu(I)-katalysierten Reaktion einer (3-Azido-2-hydroxypropyl)-hydroxyethylcellulose mit Phenylacetylen bei Raumtemperatur nach etwa 20 min ein deutliches Maximum durchlaufen. Danach sinkt die Viskosität ab und zwar unter den Ausgangswert. Auch läßt sich die Viskosität, beginnend mit einem niedrigen Niveau, steigern und auf hohem Niveau halten, wie in Fig. 3 am Beispiel des bifunktionalen 1,3-Diethinylbenzol gezeigt.

An die Alkin-Komponente können weitere Reste kovalent gebunden sein. Die aus der Cycloadditionsreaktion hervorgehenden Produkte können dementsprechend ionisch oder nicht-ionisch sein. Die weiteren Reste können auch Reaktiv-Farbstoffe, Chromophore, Vernetzungsbausteine oder andere Reste sein, die den Umsetzungsprodukten besondere Eigenschaften verleihen.

Die 1,3-dipolare Cycloadditionsreaktion erfolgt allgemein innerhalb von Sekunden mit minimalen Mengen an Katalysator.

Gegenstand der vorliegenden Erfindung sind auch die durch die beschriebene kupferkatalysierte 1,3-dipolare Cycloaddition (CuAAC) erhältlichen modifizierten Celluloseether.

Die nachfolgenden Beispiele dienen zur Illustration der Erfindung. Prozente stehen darin für Gewichtsprozente soweit nicht anders angegeben oder aus dem Zusammenhang unmittelbar ersichtlich. DS- und MS-Werte wurden nach der Zeisel-Methode bestimmt. Brookfield-Viskositäten wurde bestimmt mit einem Brookfield Rotationsviskosimeter Modell DV-III bei 20 °C, Brabender-Viskositäten mit einem Brabender Viskograph Typ 800445010 bei 20 °C.

### Beispiel 1 (Herstellung von 1-Azido-2,3-epoxy-propan):

46,3 g (0,5 mol) Epichlorhydrin wurden unter Rühren bei Raumtemperatur zu einer Lösung von 84,5 g (1,3 mol) Natriumazid in 415,5 ml demineralisiertem Wasser gegeben. Anschließend wurden 240 g Eisessig hinzugefügt und die Mischung 4 Stunden lang bei 35 °C gerührt. Die Mischung wurde danach auf weniger als 20 °C abgekühlt und 4 mal mit je 70 ml Diethylether ausgeschüttelt. Die vereinigten organischen Phasen wurde dann unter vermindertem Druck auf die Hälfte ihres Volumens eingeengt. Die organischen Phase enthielten das Zwischenprodukt 1-Azido-3-chloro-propan-2-ol, wie durch GCMS-Analyse bestätigt wurde. Die Recyclisierung zum Endprodukt erfolgte nach Zugabe von 400 ml demineralisiertem Wasser und einer schnellen Neutralisation mit 10 molarer wäßriger NaOH-Lösung bei etwa 35 °C, bis ein pH-Wert von etwa 13 bis 14 erreicht war. Das Reaktionsgemisch wurde dann sofort mit zweimal je 75 ml Diethylether extrahiert. Die vereinigten etherischen Phasen wurde einmal mit 10 ml demineralisiertem Wasser gewaschen und anschließend mit Na₂SO₄ getrocknet. Die getrocknete etherische Phase wurde dann unter vermindertem Druck auf die Hälfte ihres Volumens eingeengt. Die Ausbeute an 1-Azido-2,3-epoxy-propan betrug etwa 60 bis 70 %, wie durch GC-Analyse ermittelt wurde. Weitere Reinigungsschritte waren nicht notwendig.

### Beispiel 2 (Herstellung von Azidohydroxypropylhydroxyethylcellulose aus Zellstoff durch Co-Veretherung):

In einem 2-Liter-Glasreaktor, ausgerüstet mit einem Ankerrührer, wurden 85,3 g (0,50 mol) Kiefern-Zellstoff (95 % Trockenanteil) in 588 g Isopropanol suspendiert. Der Reaktor wurde mit Stickstoff inertisiert, dann wurde eine Lösung von 22 g (0,55 mol) Natriumhydroxid in 129,1 g Wasser zugefügt und die Mischung weitere bei 25 °C gerührt. Dann wurden 50,64 ml (1,0 mol) Ethylenoxid hinzugefügt, die Temperatur über einen Zeitraum von 30 min auf 45 °C erhöht und die Mischung dann eine Stunde lang bei dieser Temperatur gehalten. 19,4 ml (0,165 mol) 31 %iger Salzsäure wurden dann unter kräftigem Rühren zur teilweisen Neutralisation zugesetzt, gefolgt von 43,1 g (0,25 mol) einer 57,5 %igen Lösung von Glycidylazid in Ether (Herstellung s. Beispiel 1). Die Mischung wurde über einen Zeitraum von 60 min auf 85 °C aufgeheizt und dann noch 90 min lang bei dieser Temperatur gehalten. Danach wurde sie wieder auf Raumtemperatur abgekühlt. Weitere 38,9 g (0,33 mol) 31 %iger Salzsäure wurden unter kräftigem Rühren zugegeben. Der Ansatz wurde schließlich mit Essigsäure neutralisiert, wobei Phenolphthalein als Indikator verwendet wurde. Das Produkt wurde abfiltriert mit Unterdruck, zweimal mit 85 %igem wäßrigem Isopropanol und schließlich mit Aceton gewaschen, bis der Salzgehalt des Produkts weniger als 0,5 % betrug (bestimmt durch Leitfähigkeitsmessung). Es wurde dann über Nacht bei 70 °C getrocknet. Erhalten wurden 111 g eines farblosen Feststoffs. Der Substitutionsgrad MS_{EO} wurde mit 1,29 bestimmt, der Substitutionsgrad MS_{GA} mit 0,20. Die Elementaranalyse ergab: C 46,2 %, H 6,8 %, N 3,5 %, O 43,5 %.

### Beispiel 3 (Herstellung von Azidohydroxypropyl-hydroxyethyl-cellulose durch Veretherung von Hydroxyethylcellulose):

In einem 2-Liter-Glasreaktor, ausgerüstet mit einem Flügelrührer, wurden 104,0 g (0,40 mol) Hydroxyethylcellulose (MS(HE): 1,97; ®Tylose H27NG4 der SE Tylose GmbH & Co. KG) in 717,8 g Isopropanol suspendiert. Nach Evakuieren und Inertisieren des Reaktors mit Stickstoff wurde eine Lösung von 17,6 g (0,44 mol) Natriumhydroxid in 102,3 g Wasser unter Rühren bei 25 °C zugegeben und es wurde 30 min bei dieser Temperatur weitergerührt. Danach wurden 37,8 g (0,14 mol) einer 39,3 %igen etherischen Lösung von Glycidylazid zugegeben, die Temperatur wurde über einen Zeitraum von 10 min auf 40 °C erhöht und es wurde dann noch 90 min lang bei 40 °C weitergerührt. Zur teilweisen Neutralisation wurden dann 21,7 ml (0,185 mol HCl) einer 31 %igen Salzsäure unter kräftigem Rühren zugegeben, gefolgt von 37,8 g einer 39,3 %igen Lösung von Glycidylazid in Diethylether. Über einen Zeitraum von 60 min wurde die Reaktionsmischung dann auf 85 °C erwärmt und weitere 90 min bei dieser Temperatur gehalten, bevor sie auf Raumtemperatur abgekühlt wurde. Weitere 17,4 g (0,15 mol) 31 %iger Salzsäure wurden hinzugefügt unter kräftigem Rühren. Schließlich wurde die Mischung mit Essigsäure vollständig neutralisiert (mit Phenolphtalein als pH-Indikator). Das Produkt wurde mit Unterdruck abgesaugt, zweimal mit 85 %igem wäßrigen Isopropanol und dann mit Aceton gewaschen bis der Salzgehalt weniger als 0,5 % betrug. Nach der Trocknung über Nacht bei 70 °C wurden 104 g eines farblosen Feststoffs erhalten. Als molarer Substitutionsgrad MS(HE) wurde ein Wert von 1,92, als molarer Substitutionsgrad MS(AHP) ein Wert von 0,40 ermittelt. Die Elementaranalyse ergab: C: 44,4 %, H: 7,2 %, N: 5,8 %, O: 42,6 %.

### Beispiel 4 (Herstellung von Azidohydroxypropylmethylhydroxyethylcellulose durch Veretherung von MHEC):

In einem 2-Liter-Glasreaktor, ausgerüstet mit einem Flügelrührer, wurden 83,9 g (0,30 mol) Methylhydroxyethylcellulose (DS(Me) 1,73; MS(HE) 0,12 ; ®Tylose MH 50 G4) in 578,9 g Isopropanol suspendiert. Nach dem Evakuieren und Inertisieren mit Stickstoff wurde eine Lösung von 13,2 g (0,33 mol) NaOH in 75 g Wasser unter Rühren bei 25 °C hinzugefügt und die Mischung 25 min lang bei dieser Temperatur weiter gerührt. Dann wurden 8,1 g (0,038 mol) einer 46,2 %igen etherischen Glycidylazid-Lösung hinzugefügt, die Temperatur über einen Zeitraum von 10 min auf 40 °C erhöht und die Mischung weitere 90 min bei dieser Temperatur gehalten. Zur teilweisen Neutralisation wurden dann 19,4 ml (0,165 mol) 31 %iger Salzsäure unter kräftigem Rühren hinzugefügt. Danach wurde eine weitere Menge von 8,1 g (0,038 mol GA) einer 46,2 %igen Lösung von Glycidylazid in Diethylether zugefügt. Über einen Zeitraum von 60 min wurde die Mischung auf eine Temperatur von 85 °C erhöht und dann 90 min lang bei dieser Temperatur gehalten, bevor sie auf Raumtemperatur abgekühlt wurde. Weitere 15,5 g 31 %iger Salzsäure (0,13 mol HCl) wurden unter kräftigem Rühren zugegeben. Der Ansatz wurde dann mit Essigsäure vollständig neutralisiert (gegen Phenolphthalein). Das Produkt wurde mit Unterdruck abfiltriert und dreimal mit Aceton gewaschen bis der Salzgehalt weniger als 0,5 % betrug. Nach dem Trocknen über Nacht bei 70 °C verblieben 60,9 g eines farblosen Feststoffs. MS(HE): 0,11; MS(GA): 0,047; DS(Me): 1,64 Die Elementaranalyse ergab: C: 46,8 %, H: 7,3 %, N: 1,3 %, O: 44,6 %

### Beispiel 5 (Kupfer-katalysierte Kupplung von Azidohydroxypropylhydroxyethylcellulose mit Phenylacetylen):

3,57 g Azidohydroxypropylhydroxyethylcellulose (95,5 % Feststoffanteil; MS(HE): 1,1; MS(GA): 0,11) wurden zu 380 ml entmineralisiertem Wasser gegeben und die Mischung wurde bei Raumtermperatur gerührt bis sich eine klare, farblose, viskose Lösung gebildet hatte. Die Brookfield-Viskosität betrug 153 mPa·s, die Viskosität nach der Brabender-Methode 156 Brabender-Einheiten. Die Mischung wurde in einen Brabenderbecher überführt und unter Rühren wurden 0,78 g (7,7 mmol, 4,5 Äquiv. relativ zu MS(GA): 0,11) Phenylacetylen zugegeben, gefolgt von einer Lösung von 0,19 g (0,77 mmol) Kupfersulfatpentahydrat und 0,34 g (1,92 mmol) Ascorbinsäure in 2 ml entmineralisiertem, entgastem Wasser. Der Viskositätsverlauf wurde über die Zeit aufgezeichnet. Während der Reaktion färbte sich die anfangs farblose Lösung intensiv gelb. Nach Beendigung der Reaktion setzte sich über Nacht ein gelber, stichfester, gelartiger Feststoff am Behälterboden unter einem klaren, farblosen, niederviskosen, wässrigen Überstand ab. Das Gel konnte durch Ansäuern mit Salzsäure wieder in Lösung gebracht werden, wodurch die Viskosität des Überstands wieder deutlich anstieg. Durch Alkalisieren mit NaOH in einen pH-Bereich > 8 kam es wieder zum Ausfallen eines Feststoffs.

## Patentansprüche

1. Nicht-ionischer, wasserlöslicher Celluloseether, **dadurch gekennzeichnet, dass** er 3-Azido-2-hydroxypropyl (AHP)-Gruppen aufweist, die jeweils über eine Etherbindung mit der Cellulose verbunden sind, wobei der molare Substitutionsgrad MS_{AHP} im Bereich von 0,001 bis 0,30 liegt und weiterhin **dadurch gekennzeichnet, dass** er neben den 3-Azido-2-hydroxypropyl-Gruppen Alkyl- und/oder Hydroxyalkyl-Gruppen aufweist.

2. Celluloseether gemäß Anspruch 1, **dadurch gekennzeichnet, dass** die Alkylgruppen geradkettige (C₁ - C₆)Alkylgruppen sind, bevorzugt Methyl- oder Ethylgruppen.

3. Celluloseether gemäß Anspruch 1 oder 2, **dadurch gekennzeichnet, dass** die Hydroxyalkylgruppen 2-Hydroxyethyl- oder 2-Hydroxypropyl-Gruppen sind.

4. Celluloseether gemäß einem oder mehreren der Ansprüche 1 bis 3, **dadurch gekennzeichnet, dass** der MS_{AHP} im Bereich von 0,01 bis 0,30, besonders bevorzugt im Bereich von 0,05 bis 0,25, liegt.

5. Celluloseether gemäß einem oder mehreren der Ansprüche 1 bis 4, **dadurch gekennzeichnet, dass** bei Alkylhydroxyalkylcellulosen mit 3-Azido-2-hydroxypropylgruppen der DS(Alkyl) im Bereich von 1,0 bis 2,5 liegt, bevorzugt von 1,2 bis 2,1, besonders bevorzugt 1,4 bis 1,9, und der MS (HE bzw. HP) im Bereich von 0,01 bis 1,0 liegt, bevorzugt von 0,05 bis 0,8, besonders bevorzugt von 0,05 bis 0,6.

6. Celluloseether gemäß einem oder mehreren der Ansprüche 1 bis 5, **dadurch gekennzeichnet, dass** bei Hydroxyalkylcellulosen mit 3-Azido-2-hydroxy-propylgruppen der MS(Hydroxyalkyl) im Bereich von 1,0 bis 4,0, bevorzugt von 1,5 bis 3,5, liegt.

7. Celluloseether gemäß einem oder mehreren der Ansprüche 1 bis 6, **dadurch gekennzeichnet, dass** er einen durchschnittlichen Polymerisations-grad DPₙ von 50 bis 3.000, bevorzugt von 100 bis 2.000, besonders bevorzugt von 600 bis 1.400, aufweist.

8. Celluloseether gemäß einem oder mehreren der Ansprüche 1 bis 7, **dadurch gekennzeichnet, dass** die 3-Azido-2-hydroxypropyl-Gruppen mit einem Alkin umgesetzt sind.

9. Cellulosether gemäß Anspruch 8, **dadurch gekennzeichnet, dass** das Alkin eine Verbindung der Formel H-C≡C-R⁴ ist,
wobei R⁴
ein geradkettiger oder verzweigter (C₁ - C₁₈)Alkylrest,
ein Alkenylrest der Formel -[CH₂]ₘ-CH=CH₂, wobei m eine ganze Zahl von 1 bis 8 ist,
ein substituierter Alkylrest der Formel -[CH₂]ₙ-CX₂Y,
wobei n eine ganze Zahl von 0 bis 8 ist, X für Wasserstoff, Fluor oder Chlor steht und Y für Wasserstoff, Fluor, Chlor, NH₂, OH, O-CH₃, CO₂Hoder CO₂CH₃ steht mit der Maßgabe, dass X und Y nicht zugleich für ein Wasserstoffatom stehen,
ein Polyoxyalkylenrest der Formel -[CH₂-CH₂-O]ₚ-CH₂Z,
wobei p eine ganze Zahl von 1 bis 8 ist und Z für ein Wasserstoffatom oder eine Methylgruppe steht,
ein aromatischer Rest, bevorzugt eine Phenyl-, Biphenyl oder Naphthylgruppe, ein substituierter aromatischer Rest, wobei die an aromatische Kohlenstoffatome gebundenen Substituenten gleich oder verschieden und ausgewählt sind aus der Gruppe bestehend aus -H, -F, -Cl, -NH₂, -CH₃ oder - OCH₃, mit der Maßgabe, dass nicht alle Substituenten zugleich für ein Wasserstoffatom stehen; oder
ein heterocyclischer Rest ist;
oder
Diin der Formel H-C≡C-R⁵-C≡C-H ist,
wobei R⁵
ein zweiwertiger aromatischer Rest, wie *ortho-, meta-* oder *para*-Phenylen, Biphenyl-4,4'-diyl oder Naphthalin-1,4-diyl, ist oder
ein substituierter zweiwertiger aromatischer Rest, wobei die an aromatische Kohlenstoffatome gebundenen Substituenten gleich oder verschieden und ausgewählt sind aus der Gruppe bestehend aus H, F, Cl, NH₂, CH₃ oder OCH₃, mit der Maßgabe, dass nicht alle Substituenten zugleich für ein Wasserstoffatom stehen.

10. Celluloseether gemäß Anspruch 8 oder 9, **dadurch gekennzeichnet, dass** das Alkin Phenylacetylen, Propargylalkohol, Propiolsäure oder 1*H*-Imidazol-1-carbonsäurepropargylester ist.

11. Verfahren zur Herstellung der Celluloseether gemäß Anspruch 7, **dadurch gekennzeichnet, dass** die Umsetzung des Celluloseethers mit dem Alkin von Kupfer, Kupferverbindungen oder -salzen oder von Ruthenium-Komplexen katalysiert wird.

12. Verwendung der Celluloseether gemäß Anspruch 8 zur Einstellung der rheologischen Eigenschaften und der Wasser-Retention von wässrigen Lösungen oder zur Einstellung der rheologischen Eigenschaften von unpolaren organischen Lösungen.

## Claims

1. Non-ionic, water-soluble cellulose ether, **characterized in that** it has 3-azido-2-hydroxypropyl (AHP) groups each bound to the cellulose via an ether link, wherein the molar degree of substitution MS_{AHP} is in the range from 0.001 to 0.30 and furthermore **characterized in that** it has alkyl and/or hydroxyalkyl groups in addition to the 3-azido-2-hydroxypropyl groups.

2. Cellulose ether according to Claim 1, **characterized in that** the alkyl groups are straight-chain (C₁ - C₆) alkyl groups, preferably methyl or ethyl groups.

3. Cellulose ether according to Claim 1 or 2, **characterized in that** the hydroxyalkyl groups are 2-hydroxyethyl or 2-hydroxypropyl groups.

4. Cellulose ether according to one or more of Claims 1 to 3, **characterized in that** the MS_{AHP} is in the range from 0.01 to 0.30, particularly preferably in the range from 0.05 to 0.25.

5. Cellulose ether according to one or more of Claims 1 to 4, **characterized in that**, for alkylhydroxyalkyl celluloses having 3-azido-2-hydroxypropyl groups, the DS(alkyl) is in the range from 1.0 to 2.5, preferably from 1.2 to 2.1, particularly preferably 1.4 to 1.9, and the MS (HE or HP) is in the range from 0.01 to 1.0, preferably from 0.05 to 0.8, particularly preferably from 0.05 to 0.6.

6. Cellulose ether according to one or more of Claims 1 to 5, **characterized in that**, for hydroxyalkyl celluloses having 3-azido-2-hydroxypropyl groups, the MS(hydroxyalkyl) is in the range from 1.0 to 4.0, preferably from 1.5 to 3.5.

7. Cellulose ether according to one or more of Claims 1 to 6, **characterized in that** it has an average degree of polymerisation DPₙ of 50 to 3000, preferably 100 to 2000, particularly preferably 600 to 1400.

8. Cellulose ether according to one or more of Claims 1 to 7, **characterized in that** the 3-azido-2-hydroxypropyl groups are reacted with an alkyne.

9. Cellulose ether according to Claim 8, **characterized in that** the alkyne
is a compound of the formula H-C≡C-R⁴,
where R⁴
is a straight-chain or branched (C₁ - C₁₈) alkyl radical,
is an alkenyl radical of the formula -[CH₂]ₘ-CH=CH₂, where m is a whole number from 1 to 8,
is a substituted alkyl radical of the formula - [CH₂]ₙ-CX₂Y,
where n is a whole number from 0 to 8, X is hydrogen, fluorine or chlorine and Y is hydrogen, fluorine, chlorine, NH₂, OH, O-CH₃, CO₂Hor CO₂CH₃ with the proviso that X and Y are not both simultaneously hydrogen,
is a polyoxyalkylene radical of the formula - [CH₂-CH₂-O]ₚ-CH₂Z,
where p is a whole number from 1 to 8 and Z is a hydrogen atom or a methyl group,
is an aromatic radical, preferably a phenyl, biphenyl or naphthyl group,
is a substituted aromatic radical, where the substituents bound to the aromatic carbon atoms are identical or different and are selected from the group consisting of -H, -F, -Cl, -NH₂, -CH₃ or -OCH₃, with the proviso that not all substituents are simultaneously hydrogen; or
is a heterocyclic radical;
or
is diyne of the formula H-C≡C-R⁵-C≡C-H,
where R⁵
is a bivalent aromatic radical, such as *ortho-, meta-* or para-phenylene, biphenyl-4,4'-diyl or naphthalene-1,4-diyl or
is a substituted bivalent aromatic radical, where the substituents bound to the aromatic carbon atoms are identical or different and are selected from the group consisting of H, F, Cl, NH₂, CH₃ or OCH₃, with the proviso that not all substituents are simultaneously hydrogen.

10. Cellulose ether according to Claim 8 or 9, **characterized in that** the alkyne is phenylacetylene, propargyl alcohol, propiolic acid or propargyl 1*H*-imidazole-1-carboxylate.

11. Method for preparing cellulose ethers according to Claim 7, **characterized in that** the reaction of the cellulose ether with the alkyne is catalysed by copper, copper compounds or copper salts or by ruthenium complexes.

12. Use of cellulose ethers according to Claim 8 for adjusting the rheological properties and the water retention of aqueous solutions or for adjusting the rheological properties of non-polar organic solutions.

## Revendications

1. Ether de cellulose non-ionique soluble dans l'eau,
**caractérisé en ce qu'**il comprend des groupes 3-azido-2-hydroxypropyle (AHP) liés à la cellulose via une liaison éther, dans lequel les groupes AHP présentent un degré de substitution molaire MS_{AHP} dans la plage de 0,001 à 0,30 et en outre **caractérisé en ce qu'**il présente des groupes alkyle et/ou hydroxyalkyle en plus des groupes 3-azido-2-hydroxypropyle.

2. Ether de cellulose selon la revendication 1, **caractérisé en ce que** les groupes alkyle sont des groupes à chaine linéaire en C₁-C₆, de préférence des groupes méthyle ou éthyle.

3. Ether de cellulose selon la revendication 1 ou 2, **caractérisé en ce que** les groupes hydroxyalkyle sont des groupes 2-hydroxyéthyle ou 2-hydroxypropyle.

4. Ether de cellulose selon une ou plusieurs des revendications 1 à 3, **caractérisé en ce que** le MS_{AHP} se situe dans la plage de 0,01 à 0,30, de préférence dans la plage de 0,05 à 0,25.

5. Ether de cellulose selon une ou plusieurs des revendications 1 à 4, **caractérisé en ce que**, pour les alkylhydroxyalkylcelluloses ayant des groupes 3-azido-2-hydroxypropyle, le DS(alkyle) se situe dans la plage de 1,0 à 2,5, de préférence de 1,2 à 2,1, de façon particulièrement préférée de 1,4 à 1,9, et le MS (HE ou HP) se situe dans la plage de 0,01 à 1,0, de préférence de 0,05 à 0,8, de façon particulièrement préférée de 0,05 à 0,6.

6. Ether de cellulose selon une ou plusieurs des revendications 1 à 5, **caractérisé en ce que**, pour les hydroxyalkylcelluloses ayant des groupes 3-azido-2-hydroxypropyle, le MS(hydroxyalkyle) se situe dans la plage de 1,0 à 4,0, de préférence de 1,5 à 3,5.

7. Ether de cellulose selon une ou plusieurs des revendications 1 à 6, **caractérisé en ce qu'**il présente un degré moyen de polymérisation DPₙ de 50 à 3000, de préférence de 100 à 2000, de façon particulièrement préférée de 600 à 1400.

8. Ether de cellulose selon une ou plusieurs des revendications 1 à 7, **caractérisé en ce que** les groupes 3-azido-2-hydroxypropyle sont convertis avec un alcyne.

9. Ether de cellulose selon la revendication 8, **caractérisé en ce que** l'alcyne est un
composé de formule H-C≡C-R⁴,
où R⁴ est :
un radical alkyle en C₁-C₁₈ à chaine linéaire ou ramifiée,
un radical alcényle de formule -[CH₂]ₘ-CH=CH₂, où m est un nombre entier de 1 à 8,
un radical alkyle substitué de formule -[CH₂]ₙ-CX₂Y, où n est un nombre entier de 0 à 8, X est un hydrogène, un fluor ou un chlore et Y est un hydrogène, un fluor, un chlore, NH₂, OH, O-CH₃, CO₂H ou CO₂CH₃ à condition que X et Y ne constituent pas simultanément un hydrogène,
un radical polyoxyalkylène de formule -[CH₂-CH₂-O]ₚ-CH₂Z, où p est un nombre entier de 1 à 8 et Z est un atome d'hydrogène ou un groupe méthyle,
un radical aromatique, de préférence un groupe phényle, biphényle ou naphtyle,
un radical aromatique substitué, où les substituants liés aux atomes de carbone aromatiques sont identiques ou différents et sont choisis dans le groupe consistant en -H, -F, -Cl, -NH₂, -CH₃ ou -OCH₃, à condition que tous les substituants ne constituent pas simultanément un hydrogène, ou
un radical hétérocyclique ;
ou
un diyne de formule H-C≡C-R⁵-C≡C-H,
où R⁵ est _{:}
un radical aromatique bivalent, tel qu'un ortho-, méta- ou para-phénylène, un biphényl-4,4'-diyle ou un naphtaline-1,4-diyle, ou
un radical aromatique bivalent substitué, où les substituants liés aux atomes de carbone aromatiques sont identiques ou différents et sont choisis dans le groupe consistant en H, F, Cl, NH₂, CH₃ ou OCH₃, à condition que tous les substituants ne constituent pas simultanément un hydrogène.

10. Ether de cellulose selon la revendication 8 ou 9, **caractérisé en ce que** l'alcyne est le phénylacétylène, l'alcool de propargyle, l'acide propiolique ou un ester de propargyle de l'acide 1H-imidazole-1-carboxylique.

11. Procédé de fabrication de l'éther de cellulose selon la revendication 7, **caractérisé en ce que** la conversion de l'éther de cellulose avec l'alcyne est catalysée avec du cuivre, des composés ou des sels de cuivre ou des complexes de ruthénium.

12. Utilisation de l'éther de cellulose selon la revendication 8 pour le réglage des propriétés rhéologiques et de la rétention en eau de solutions aqueuses ou pour le réglage des propriétés rhéologiques de solutions organiques non-polaires.
